# EUROPEAN PATENT APPLICATION

(11) **EP 1 519 191 A1**
(43) Date of publication of application: **30.03.2005**
(21) Application number: 03701458.6
(22) Date of filing: 22.01.2003
(51) Int. Cl.: G01N 33/50

(54) **BIOCHIP WITH MAXIMIZATION OF THE REACTOR NUMBER**

(30) Priority: 12.06.2002 CN 02113864; 19.08.2002 CN 02133622; 04.11.2002 CN 02134007; 04.11.2002 CN 02134006
(71) Applicant: Chengdu Kuachang Science & Technology Co., Ltd., Sichuan 610041 (CN)
(72) Inventor: ZOU, Fanglin, Chengdu, Sichuan 610000 (CN); CHEN, Chunsheng, Chengdu, Sichuan 610000 (CN); WANG, Jianxia, Meishan, Sichuan 610000 (CN); CHEN, Ning, Panzhihua, Sichuan 610000 (CN)
(74) Representative: Grünecker, Kinkeldey, Stockmair & Schwanhäusser Anwaltssozietät
(86) International application number: PCT/CN2003/000055
(87) International publication number: WO 2003/106999

(57) **Abstract**

This invention concerns a biochip, consisting primarily of one or several dieplates and one or several substrates with or without probe immobilized, and comprising a maximized number of reactors, wherein: a. said maximization of said reactor number is performed by minimizing structure-covered area on the substrate and/or maximizing effective area on the substrate, wherein said structure is partition structure of the reactor and/or structure other than the reactor; and b. said partition structure is characteristically based on surface partition, hydrophobic surface partition, or height-difference partition.

## Description

### Technical scope

This invention involves a biochip with a maximized number of reactors. The maximization is attained through maximizing the effective area on the substrate, minimizing the area covered by partition structure on the substrate, or diminishing or even removing the substrate area covered by structure other than reactors. Thereby the average substrate area per reactor is minimized, the reactor cost is reduced and the usage efficiency of the biochip is increased.

### Background techniques

In this invention, term "biochip", or "chip" refers to an analysis product, in which probes are immobilized on the surface of substrate in an addressable pattern, and are made to react specifically with target molecules of a biological sample under detectable conditions to obtain identified result.
At present, the most prevailant biochip is peptides-chip and gene-chip. The peptides-chip is a biochip prepared by immobilizing sequences of amino acids (including protein) on the substrate as probe. Gene-chip is prepared by hybridizing nucleic acid and/or nucleotide acid of a sample with complementary target nucleic acid and/or nucleotide acid; or is prepared by combining with specific antibody so as to produce a hybridization result indicated through coloration reaction.
Biochip can be applied in extensive fields, including gene expression detection, gene screening, medicine screening, diagnosis and treatment of diseases, inspection and protection of environment, identification in judicial affairs, etc.
The core of biochip is the reactor thereon. In this invention, the term "reactor" of biochip refers to the location and other relative structures, in which probe array is immobilized and is made to react specifically with target molecules. The "probe" in this invention includes all bio-active substances that can be immobilized addressably on the substrate, such as DNA, peptide, protein, cell, tissue etc. In this invention, the "substrate" refers to the component acting as solid matrix to immobilize probe array in biochip; the "probe-plate" refers to the substrate fixed with probe array. In this invention, biochip is defined as mono-reactor biochip (n=1) and multi-reactor-biochip (n ≥ 2), according to the number(n) of reactors on a biochip.
In this invention, the reactor is defined as flow-reactor or non-flow-reactor according to whether the liquid media added can flow directionally in the reactor or not. The biochip characterized by flow-reactor and non-flow-reactor is defined as flow-biochip and non-flow-biochip respectively.
In this invention, the reactor is defined as open-reactor or closed reactor according to whether the area above the probe array is open or not in the whole process of detection. The biochip characterized by open-reactor and closed reactor is defined as open biochip or closed biochip respectively.
The biochip reactor, in most cases, simultaneously presents all the characteristics of the various reactors mentioned above. In this invention, this type of reactor is defined as a reactor with all of the said characteristics. The biochip characterized by this type of reactor is also defined in the same way. For example: when the area above the probe array immobilized is open and the liquid media added can flow in a certain direction as required during the detection, this reactor is defined as open-flow-reactor; the corresponding biochip is defined as open flow biochip, or open flow chip in short; the rest may be deduced by analogy.

The current situation of biochip is as the following:
1. Non-flow biochip
   Non-flow biochip includes closed non-flow biochip and open non-flow biochip; the open non-flow biochip is most widely used recently.
   The present open non-flow biochip is that with one open non-flow reactor, e.g. the biochip with activated microscope slide and probes spotted on the slide without any other structure added newly. This biochip presents the following advantages: simple structure, easy and convenient spotting and scanning, part of which can even be conducted in the flowing medium propelled by external forces (e.g. liquid spray for washing). However, this biochip brings about an high production and detection cost and low efficiency when only a few types of probe are spotted and a small probe array is formed, e.g. peptide-chip or protein-chip with a few types probes immobilized (e.g. several to hundreds). In this case, the practical use of this biochip is quite limited.
   The manufacturers and scientists have made many improvements on this type of biochip in order to increase the efficiency, e.g. developing single open non-flow biochip into multiple open non-flow biochip. At present, the multiple open non-flow biochip available in market is of a basic structure such as the following: a biochip with several to dozens of spherical or cubic open-reactors, in which the substrate is a standard substrate with the size of 25mm x 75mm or 26mm x 75mm (width x height), and partition structure height is less than 1.0mm. Since the reactor of this biochip has merely inlet region and reaction region, but no outlet region, the efficiency of this biochip is still to be further improved, because the reactive media cannot flow as oriented in the reactor thus a continual operation is impossible. In addition, without outlet region, the height of partition structure is critical. If the height is too low, it is easy to produce a cross contamination among neighbor reactors; if the height is too high, it is impossible to read the reaction result by the biochip scanner widely used today.
   With regard to these problems, we invented «a detachable biochip» (Chinese patent application number 02113540.1). In the invention, the substrate with the probe arrays is assembled with device comprising the reactor partition structure high enough to prevent cross-contamination among the reactors in the reactions, while in the scanning it is dismantled from the device to suit the requirement of scanner.
   Through all the biochips with multiple open reactors now in use, except the removable biochip, present multiple reactors on one substrate, no systemic effort has been made to maximize the number of reactors so far. e.g. other functional structures(e.g. the place for hand holding) except reactors have covered a large area on the substrate, usually over 30%.
   Another example for biochip with multiple closed non-flow reactor is «micro-array biochip for multiple samples » (Chinese patent application number 01112783.x). It presents multiple reactors without inlet or outlet, and the probe array in the reactor is closed during the reaction, and is exposed in process except the reaction. The reactor is closed with a polyester wafer after adding the sample, and disclosed after the reaction for moving out the sample and washing the reactor. And then, the reactor is again closed after adding some other reagents, and again disclosed after the reaction, the process is repeated until the analysis is finished. It is very complex to use this biochip, which is different from the characteristic biochip in this invention.
2.Flow biochip
   At present, the only flow biochip available is closed flow biochip including a capillary biochip device (Chinese patent number CN 2483395Y) and a micro-channel biochip. The micro-channel biochip is made through preparing micro-channel (width less than 0.05mm and depth less than 0.025mm) on the substrate, and immobilizing the probe in the fluidic micro-channel. When it is used, a sample is continuously added in the micro-channel with the probe immobilized, and then the reaction result is read by the signal detective system. One example of the micro-channel biochip is a biochip produced by Caliper Technologies Inc (www.caliper.com), in which the probe is immobilized in the micro-channel, formed by carving glass slide using laser techniques and etching techniques. In this biochip, there are several open reservoir wells connected with the micro-channel. The micro-channel biochip presents advantages of high sensitivity and a fast speed. However, it presents some disadvantages: 1) a complex structure which make its industrial production difficile; 2) a specific flow condition which needs a sophisticated flow-rate controlled instrument, e.g. electronic osmosis device; 3) a specific condition for reading the reaction result, which needs other instrument than the common biochip scanner for some detection like fluorescence label detection, because the probe is immobilized in the interior surface of the micro-channel. One example of the capillary biochip device is a biochip consisting of a carry sheet glass (substrate) and several tiny poly-ethylamide gel strips bound on the glass. The probe is immobilized on the strip which is used for the analysis of target DNA, RNA and protein.
   The maximization of the number of reactors on a biochip has not been considered for present closed flow biochip.
In brief, all present biochips are principally directed to the object of maximizing the probe density in the reactor, in order to maximize the number of detected target molecules using a reactor. The probe density has been thousands and even ten thousands of probes per square centimeter, and a higher probe density is being developed. The corresponding spotter and scanner are also designed and manufactured for this purpose. Althrough having some advantages, the above-mentioned biochips present a great average substrate area per reactor. It is the average substrate area per reactor which determine the cost of biochip, in case of analyzing a sample with a few types of target molecules, e.g. less than 100 types. Only a few kinds of probe are needed for analyzing a few kinds of target molecule in a reactor. So, a pending problem in the yield is to maximize number of reactor in a substrate within a limited area.

### Invention contents

So, this invention provides a biochip, consisting primarily of one or several dieplates and one or several substrates with or without probe immobilized, and comprising a maximized number of reactor, wherein: said maximization of said reactor number is realized by minimizing structure-covered area on the substrate and/or maximizing effective area on the substrate, wherein said structure is partition structure of the reactor and/or structure other than the reactor; and said partition structure is characteristically based on surface partition, hydrophobic surface partition, or height-difference partition.

In an embodiment, the subject invention provides a biochip in which said dieplate and said substrate form, through connection, one or several closed flow reactors with inlet and outlet. In the biochip, said dieplate and said substrate are connected either reversibly or irreversibly. The reversible connection, dis-connectable when desired, is performed with one or more following forces: a). mechanical force generated by gravity, elasticity, screws or fixture; b). magnetic force generated by magnet or electric magnet; c). removable adhesion force produced by adhesive; and which is. The dieplate is partial or entire machine-eliminable when it is desired to open the top or/and to decrease the height of said reactor formed by said irreversible connection.

In other embodiment, the subject invention provides a biochip in which the partition structure includes a concave structure. In the biochip, the concave structure contains one or more of the following flow-controlling structures: a. hydrophilic material layer; b. hydrophobic material layer; c. layer of water-absorbing material based on capillary actions; and d. leading ditches, leading trough, leading strip helpful for flow-controlling.

In another embodiment, the subject invention provides a biochip with multiple reactors, in which the dieplate and the substrate are connected by adhesion and form multiple open reactors with a partition structure of a height of more than 0.7mm. In the biochip, as required, the partition structure is either eliminable or height-deductible through removal of said adhesion or by mechanic action, wherein: a. the removal is performed with one or more following actions: a). physicochemical action of swelling and dissolving with water or/and organic solvents; b). physical action of ultrasonic wave; and c). mechanic action; and b. the mechanic action includes grinding, cutting, whittling or their combination.

In another embodiment, the subject invention provides a biochip with multiple reactors, in which a. the dieplate and the substrate form, through connection, multiple open reactors with special outlet region; and b. the partition structure on the dieplate presents a height of less than 1.0 mm and an hydrophobicity more than that of the substrate.

In the biochip with multiple reactors of this invention, the substrate presents a width of less than 20mm when two or more lines of reactors are formed on a substrate; or the substrate presents a width of less than 9 mm when only one line of reactors are formed on a substrate.
In the biochip with multiple reactors of the invention, the partition structure presents a height of more than that of parts or all of other structure on the biochip. The other structure includes scanning-reference-plane on the same plane as the substrate plane with immobilized probes.
The biochip with multiple reactors according to this invention has an area larger than that of the substrate, so parts or all of inlet structures or/and outlet structures of said reactor are set on dieplate region where said dieplate goes beyond said substrate.
In the biochip with multiple reactors according to this invention, the reactor comprises inlet region and/or outlet region including one or more of the following flow-controlling-structures: a. layer of hydrophilic material; b. layer of hydrophobic material; c. layer of water-absorbent based on capillary actions; and d. leading ditch, leading trough, leading strip helpful for flow-controlling.

In the biochip according to this invention: the hydrophilic material includes: a). hydrophilic inorganic material including silicon, aluminum compounds; b). hydrophilic organic material including polyacrylamide compounds; c). hydrophilic coating; and d). natural macromolecular material and its derivatives; the hydrophobic material includes hydrophobic organic material; and the water-absorbent includes: a). capillary, paper, membrane with hydrophilic surface; and b). porous solid material with fiber or/and hydrophilic inorganic materials.

In an other embodiment, the subject invention is directed to a biochip with two effective faces, in which the reactors with probe immobilized are formed on both top surface and bottom surface of substrate, wherein the structures on said top and on said bottom surfaces are mutually either symmetrical or asymmetrical. In the biochip, the substrate presents a thickness more than 1.0 ±0.1mm.

In the biochip according to this invention, said substrate is made from any material which can form said reactor using a relatively small average area, for instance inorganic materials such as glass, silicon and silicon compounds and etc., organic high polymer such as polypropylene, polyvinylchloride, polystyrene, nylon and nitrate cellulose, as well as organic materials whose surface is covered with metals such as gold, silver or metal compounds.
The subject invention is directed also to a combined biochip, which is composed of several biochips above-mentioned, wherein: said several biochips are combined through insertion, adhesion and mechanic apposition; its total width is of no less than 25mm; and the number of said biochips combined is changeable as required.

### Figure Illustration

Figure 1A is a top view of the dieplate of a biochip, comprising the closed flow reactor and with a partition structure based on the surface partition, according to this invention. Figure 1B is a bottom view of the dieplate in figure 1A. Figure 1C is a schematic diagram of multiple probe arrays on the substrate of the biochip in figure 1A. Figure 1D is a cross-section cut straight along the line of a-a in figure 1A. Figure 1E is a cross-section cut straight along the line of b-b in figure 1A.
Figure 2 is a schematic diagram of how the dieplate in figure 1B and the substrate in figure 1C are connected by a magnetic fixturn.
Figure 3A is a block diagram of a biochip according to this invention, comprising the reactor with the partition structure including concave structure. Figure 3B is a cross-section cut straight along horizontal plane of the biochip in figure 3A. Figure 3C is a cross-section cut straight through horizontal plane of a biochip according to this invention, comprising the reactor with the partition structure including the concave structure with water-absorbing layer.
Figure 4A is a top view of a biochip according to this invention, comprising the multiple open reactors with the partition structure based on the height difference. Figure 4B is a cross-section of figure 4A cut straight along the line of a-a. Figure 4C is a schematic diagram of the biochip in figure 4B after the height-deduction of the partition structure.
Figure 5A is a top view of a biochip according to this invention, comprising the multiple open reactors with special outlet region and with partition structure based on the higher hydrophobicity in partition structure than in the substrate. Figure 5B is a cross-section of Figure 5A cut straight along the line of a-a. Figure 5C includes some schematic diagrams of the outlet regions in varied shaped reactor in 5A.
Figure 6A is a schematic diagram of the biochips of figure 4 and figure 5 with different shaped reactor. Figure 6B shows the possible shape of the reactors.
Figures 7A, 7B and 7C + 7D indicate some relationships between the substrate and the dieplate with reactor structure.
Figure 8A is a cross-section of a biochip with two effective faces according to this invention. Figure 8B is a schematic diagram of the probe arrays immobilized on two surfaces of the substrate in the biochip of figure 8A.
Figure 9 is a schematic diagram of a biochip with two effective faces, in which the dieplate and the substrate are reversibly connected by mechanic fixture, according to this invention.
Figure 10A is a top view of a biochip with two effective faces standing on its end, where the dieplate and the substrate are connected with each other by reversible connection, according to this invention. Figure 10B is a side-view of the biochip with two effective faces in figure 10A. Figure 10C is a bottom view of the biochip with two effective faces in figure 10A.

### Detailed implementation

In the development of a screening biochip for blood transfusion, we have come to realize that how to improve the efficiency of the substrate is a key to cost controlling in the said biochip production. Only when this problem is solved can biochips with a better quality and a more competitive price than that of commonly used ELISA kit be available. Thus, "a biochip with a maximized number of reactors" has been selected as a critical research subject in our study. Thereon researches on such subject as "a detachable biochip" (Chinese patent application number 02113540.1), "a probe-plate containing closed reactor" (Chinese patent application number 02113864.8 ), "a flow biochip and its using method" (Chinese patent application number 02133622.9), "a biochip with several functional surfaces" (Chinese patent application number 02113540.1), and "a biochip with small surfaced reactors" (Chinese patent application number 02134006.4) have been carried out successively. It is based on these researches that the biochip in this invention comes into shape.

This invention aimed at maximizing the number of reactors per unit area of substrate in biochip, namely to have as many reactors on one substrate within a limited area as possible, thereby to detect as many samples as possible in one biochip.

In this invention, term "reactor" includes probe region, partition region, outlet region, and reaction well with or without inlet region. In the reactor, the probe region is a region where the probes are immobilized; the reactor well is a location where added sample reacts with the probes; the outlet region is a region out of which liquid medium and washing solution can flow after reaction; the partition region is a region surrounding reaction region, which serves to prevent the cross-contamination; the inlet region is a region through which different reaction media is added to reaction area, which may be an isolated region, or a part of probe region, outlet region or both. The outlet region can be on one side of reactor or in the region other than probe region, for instance, it may cover two sides or three sides of the probe region or even all around the probe region. Outlet structure is the structure in the outlet region, which can control the flow-rate of reactive media, such as the layer of hydrophilic material, the layer of hydrophobic material, the layer of water-absorbent material based on capillary action as well as conductive ditch, trough, hole and strip helpful to flowing control.

The example for the outlet region on one side of probe region is an outlet ditch on one side of reaction well; the example for outlet region on all sides of probe region is a designed empty region in periphery of probe region, from which the liquid can be drained by ring-shaped drainage pipe, when the partition region is higher than the probe region; or from which the liquid can automatically flow to outlet region through the peripheral probe region, when the partition region is lower than the probe region.

The hydrophilic material layer on the bottom of outlet trough may accelerate the discharge of the liquid from reaction well to outlet, which is helpful to retain liquid height in reaction well and avoid cross-contamination. The partition structure is a structure in the partition region of a reactor, which is designed to hinder abnormal flow of the liquid so as to prevent the cross-contamination among reactors. Some examples are: the isolating ditch, the isolating line, the isolating trough, the layer of hydrophilic material and the layer of hydrophobic material on the surface of the partition region. The layer of hydrophobic material on the surface of the partition region obstructs the overflow from the reaction well in abnormal condition and keeps the liquid dots splashed on partition region from flowing, thereby it diminishes the likelihood of cross-contamination. The layer of hydrophilic material on the surface of partition region can also diminishes the likelihood of cross-contamination, by accelerating the liquid outflow in the reaction well and the partition region, when the height of partition region is lower than that of probe plane.

This invention advocates a biochip, characterized by: a. its principal composition of one or more dieplates and one or more substrate or substrate conjugated with probe; b. its content of a maximized number of reactors, wherein the maximization of the amount of reactors is carried out by minimizing the substrate area occupied by reactor partition structure, by minimizing the substrate area occupied by other structures except reactor and/or by maximizing the effective area of substrate; and its reactor partition structure based on surface partition, hydrophobic partition or height difference partition.

In this invention, the "maximization of number of reactors" refers to make formation of as many as possible reactors in a biochip; the "minimization of the substrate area occupied by reactor partition structure" refers to make the partition structure to occupy only a minimized partition region on the substrate, e.g. in the closed flow biochip, in the biochip with concave partition structure, in the biochip with multiple open reactors with special outlet region, and in the biochip with multiple open reactors formed by adhesion, according to this invention; the "minimization of the substrate area occupied by other structures except reactor" refers to make the other structures except reactor to occupy only a minimized substrate area, e.g. in the biochip with an biochip area greater that substrate area of this invention; "maximization of the effective area of substrate" refers to make the effective area of substrate to be used as many as possible, e.g. the biochip with two effective faces according to this invention.

In this invention, the "partition" refers to separation of a reactor from all of other reactors in a same biochip; the "partition structure" refers to structure realizing the partition; the "surface partition" refers to the partition through one or more surfaces of piece used in the biochip, e.g. the partition achieved by enclosing the reaction well with a cover piece (e.g. in the closed flow reactor of biochip of this invention), and by separating the reaction wells on the two surfaces with substrate itself (e.g. in the biochip with two effective faces according to this invention); the "hydrophobic partition" refers to the partition formed by employing hydrophobic material, e.g. the partition in the biochip with multiple open reactors with special outlet region; the "height difference partition" refers to the partition achieved by making height difference between planes of the probe region and partition region, e.g. the partition in the biochip with concave partition structure and in the biochip with multiple open reactors formed by adhesion in this invention.

To decrease the substrate area occupied by partition structure and thereby the average substrate area per reactor while guarantee the anti-cross-contamination capacity, the biochip of this invention is a closed flow biochip with a partition structure characterized by the surface partition. In the closed flow biochip in this implementation program, the dieplate is connected with substrate to produce several closed flow reactors with both inlet and outlet.

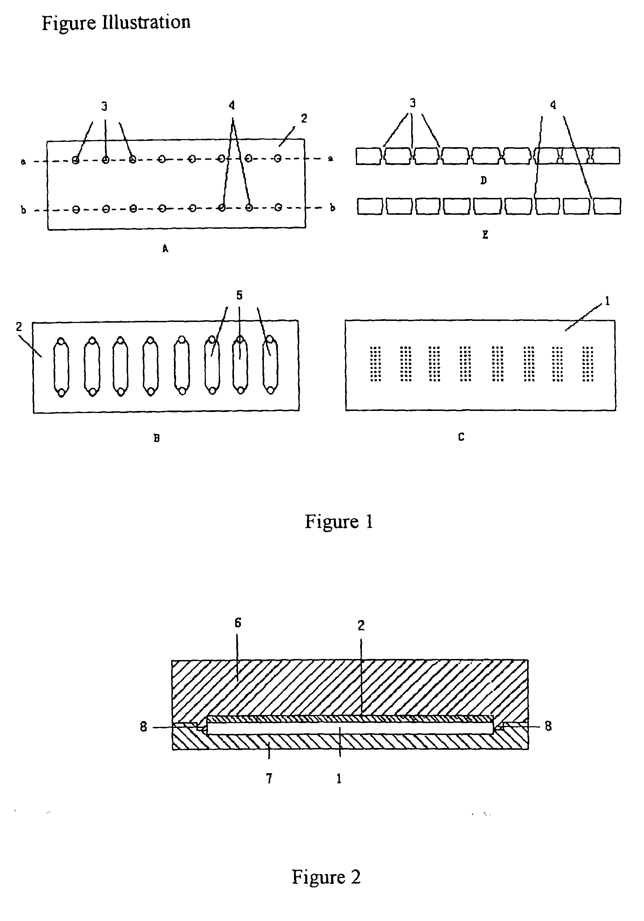

Figure 1A is a top view of the dieplate of an example of the closed flow biochip based on surface partition. Figure 1B is a bottom view of this dieplate. Figure 1C is the schematic diagram of the probe array formed on substrate in this closed flow biochip.Figure 1D is a cross-section cut straight along the line of a-a in figure 1A. Figure 1E is a cross-section cut along the line of b-b in figure 1A. The dieplate(2) comprises 8 reactor cavities(5), corresponding to 8 probe arrays on the substrate(1). Every reactor cavity(5) has inlet(3) and outlet (4) for liquid substance. For example, the closed follow biochip can be formed by connecting adhesively the substrate with the probe arrays and the dieplate with reactor cavity in figure 1B, inlet in figures 1A and figure 1D, and outletin figures 1A and figure 1E. The biochip with the surface partition, in which the area of the partition regions is minimized without the cross-contamination problem, presents a higher substrate efficiency.
The closed flow biochip in this invention is a variable biochip in which the reactor may be transformed from closed state to open state. In the biochip, the dieplate and the substrate are connected by adhesive or other reversible connection manner. When the transformation needs to remove the reactor covering or/and reduce the reactor height, the dieplate and the substrate is dis-connected in case of the reversible connection, or the dieplate is partial or entire removed mechanically in case of the irreversible connection by irreversible adhesive. For example, the closed flow reactor of the biochip can be transformed from the close state before scanning, to the open state during the scanning, through dis-connecting the partition structure connected on the substrate. The variable biochip of this invention, in which the reactor can be made the controlled transformation from close state to open state, presents the following advantage: an expanded analytical scope, an increased assay speed, and a maximized number of reactors with guaranteed scanning quality.
In this invention, the connection between the dieplate and the substrate is attributable to one or more mechanisms as listed below: mechanic force provided by gravity, elasticity, screw or fixture, magnetic force by magnet or electric magnet, removable adhesion from adhesive. For example, to forming the closed flow biochip with several independent impermeable reactors, a reversible connection between the dieplate and the substrate can be achieved by the following mechanisms: the mechanic force based on the gravity (through pressing the reactor component onto the probe-plate with enough gravity); mechanic force based on the screw (through pressing the reactor component onto the probe-plate with screwing); mechanic force based on the fixture (through pressing the reactor component onto probe-plate with coupling force between tenon and mortise); the magnetic force provided by magnet or electric magnet (through pressing the reactor component onto probe-plate with magnet or electric magnet). The closed flow biochip in this invention, which can carry out continual reaction and operation in the reactors, thus becomes high-efficiency.
Figure 2 illustrates how the closed flow biochip in this invention is formed by magnetic device (or magnetic fixture): the magnetic device consists of electric magnet 7 and plate 6 containing iron, which has opening corresponding to the outlet of dieplate 2; the substrate 1 and the dieplate 2 are clamped and reversibly connected with precise orientation by the electric magnet 7, the plate 6 containing iron, and the orientation notch 8. The connection can be dis-connected in the test process, as desired, without influencing detective precision. And this fixture device can be used repeatedly.

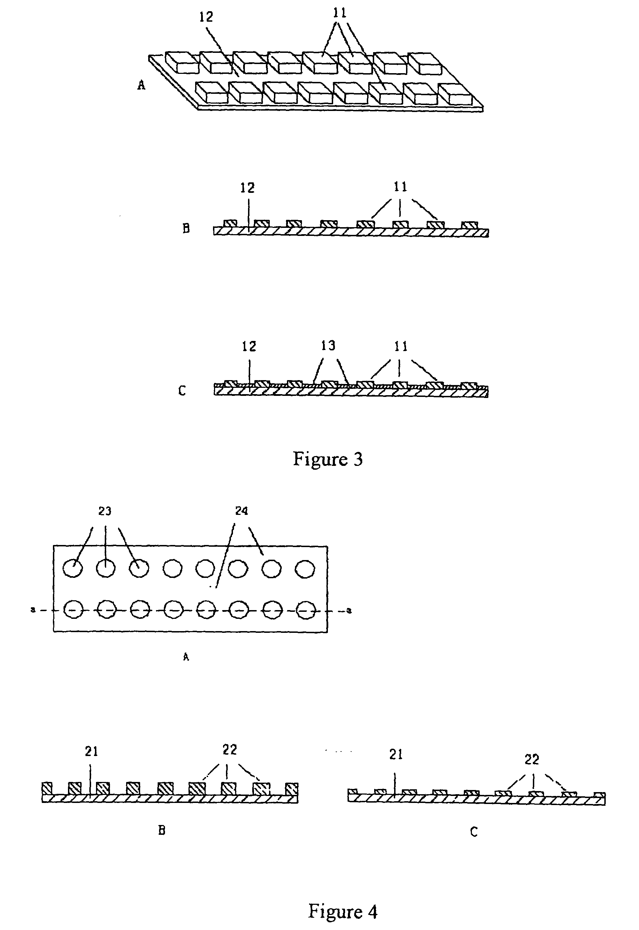

To decrease the substrate area occupied by partition structure with a limited height while guaranteeing the anti-cross-contamination capacity, the biochip of this invention is an open biochip with partition structure including concave structure. In the biochip with concave partition structure, the dieplate is connected with the substrate to form the convex and concave structure with a height difference. As shown in figure 3A and 3B, this type of biochip is made through fixing one or more substrates with probe array (probe-plate 11) on dieplate 12.
The concave partition structure of the biochip with multiple probe-plates in this invention contains one or more of the following flow-controlling structures: the layer of hydrophilic materials, the layer of hydrophobic materials, the layer of water-absorbent materials based on capillary actions as well as conductive ditch, trough, strip advantageous to flowing control. The said hydrophilic materials include inorganic hydrophilic materials such as silicon, aluminum compounds and etc., organic hydrophilic materials like polyacrylamide compounds and etc, various hydrophilic coating, natural hydrophilic macromolecular materials as well as derivatives thereof; said hydrophobic materials include many hydrophobic materials of organic compounds; said water-absorbent material includes any types of capillary, paper, membrane with hydrophilic surface, and solid porous materials with fiber or/and hydrophilic inorganic materials. As shown in 3C, the flow-controlling structure is the water-absorbent layer 13 among substrates 11 and on dieplate 12.

To decrease the substrate area occupied by partition structure with a limited height in partial process while guarantee the anti-cross-contamination capacity, the biochip of this invention is a biochip with height-variable partition structure. In this biochip, the multiple open-reactors are formed by adhesive connection between dieplate and substrate. In this biochip, the reactor partition structure with an original height over 0.7mm and preferably over 1mm, based on the height difference partition, is height-deductible. As shown in figure 4A and 4B, substrate 21 and dieplate 22 are adhered together to form reaction well 23 and partition structure 24 with a height over 0.7mm, higher than that of the prevailing biochip in use. The partition structure is lowered or removed as desired through dis-adhesion or by mechanic action. The adhesive connection between dieplate and substrate can be relieved by the dis-adhesion, which is performed with one or more of the following effects: physicochemical effect of the dissolving and swelling by water or/and organic solvents, physical effect of ultrasonic wave and mechanic force. Alcohol is preferred as the said organic solvents. Or, as shown in figure 4C, the height of reactor, formed by the dieplate, can be reduced or removed by one or more kinds of mechanic forces like grinding, cutting, or whittling etc.

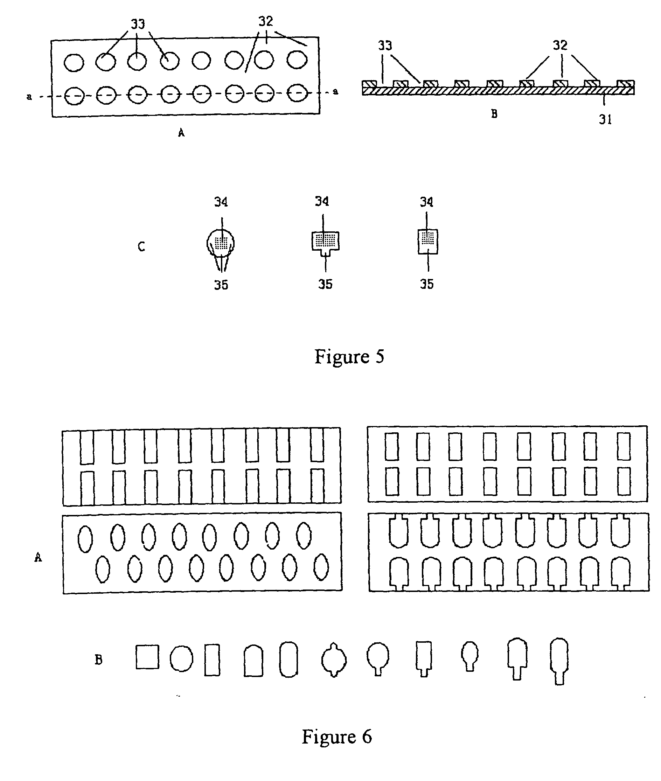

To decrease the substrate area occupied by partition structure with a limited height while guarantee the anti-cross-contamination capacity, the biochip of this invention is an open biochip with a partition structure characterized by surface hydrophobic partition. In this biochip, the dieplate and the substrate are connected to form multiple open reactors with special outlet region, and the partition structure on the dieplate presents a height of less than 1.0 mm and an hydrophobicity more than that of said substrate. As shown in figure 5A and 5b, the substrate 31 and the dieplate 32 connected on the substrate form several reactors 33. Since the hydrophobicity of dieplate 32 is higher than that of substrate 31, it can better avoid cross-contamination among reactors due to surface tension. In addition, as shown in 5C, these reactors contain various forms of the outlet region.

In the biochip schemed by figure 4 and figure 5, when two or more lines of reactors are arranged on substrate, the width of substrate is less than 20mm, however when there is only one line of reactors on substrate, the width of substrate is less than 9mm. As mentioned above, the biochip in figure 4 is one example of the height-variable biochip with multiple open reactors, and the biochip in figure 5, one example of the open biochip with hydrophobic partition structure. In these cases, as shown in figure 6, reactors can be rectangular, round or strip-shaped and etc.

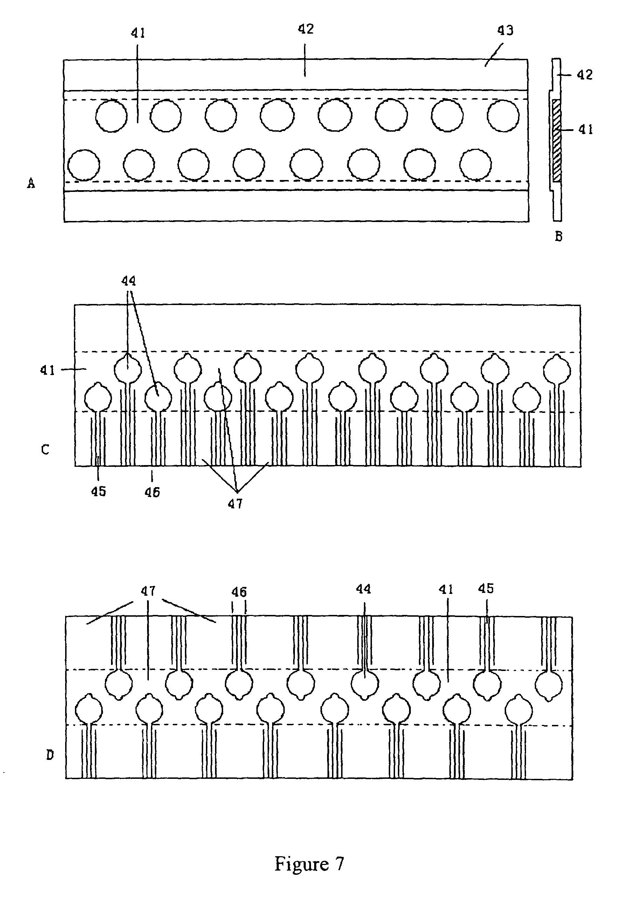

In the biochips schemed by figure 4 and figure 5, the partition structure on the biochip can be higher than substrate with probe, or even higher than some or all other structures on biochip. Said other structures include scanning reference-plane that is located on the same plane as probe plane of substrate. As mentioned above, the biochip in figure 4 is one example of the height-variable biochip with multiple open reactors, and the biochip in figure 5, one example of the open biochip with hydrophobic partition structure. As showed in figure 7, the partition structure plane (the plane of dieplate) is the highest plane.
diminishing or even removing the substrate area covered by structure other than reactors.
To decrease the substrate area occupied by structure other than reaction region and thereby diminish the average substrate area per reactor while guarantee the anti-cross-contamination capacity, the biochip of this invention is a biochip with a size larger than that of substrate. This biochip with a larger size is the biochip with height-variable partition structure as schemed by figure 4, or the open biochip with a partition structure characterized by surface hydrophobic partition as schemed by figure 5. In the biochip, part or all of the inlet structure or/and outlet structure of reactor are located in the dieplate field beyond substrate. As shown in figure 7A and Example 4, the substrate 41 is connected with central part of the dieplate 42 with both side parts for scanning reference-plane 43, to form a biochip with biochip with a limited height of hydrophobic partition structure (about 0.6 mm in the Example 4). As shown in figure 7B and 7C, the substrate 41 is connected with central part of the dieplate 42 to form a biochip, in which the reactor consists of some structures such as the reaction well 44, the outlet ditch 45, the partition ditch 46 and the partition region 47. Among these reactor structures, the outlet ditch 45 and the partition ditch 46 are formed on the part of the dieplate 42, beyond the substrate 41.

In the biochips schemed by figure 4 and figure 5, its outlet region contains one or more of the following flow-controlling structures: the layer of hydrophilic materials, the layer of hydrophobic materials, the layer of water-absorbing materials based on capillary actions as well as conductive ditch, trough, strip advantageous to flowing control. Said hydrophilic materials include inorganic hydrophilic materials such as silicon, aluminum compounds and etc., organic hydrophilic materials like polyacrylamide compounds, various hydrophilic coating, natural hydrophilic macromolecular materials as well as derivatives thereof; said hydrophobic materials include many hydrophobic materials of organic compounds; said water-absorbing material includes any types of capillary, paper, membrane with hydrophilic surface, and solid porous materials with fiber or/and hydrophilic inorganic materials.

To augment the effective area on the substrate while guarantee the anti-cross-contamination capacity, the biochip of this invention is a biochip with two effective faces, in which the probe is immobilized in reactors on top surface and bottom surface of substrate. The biochip structures on these two surfaces are mutually symmetric or asymmetric. One or more probe arrays are immobilized on each of these two surfaces respectively, to form, with corresponding structures, one or more reactors on each of these two surfaces respectively. These reactors may be open-reactors or closed reactors, flow reactors or non-flow reactors.

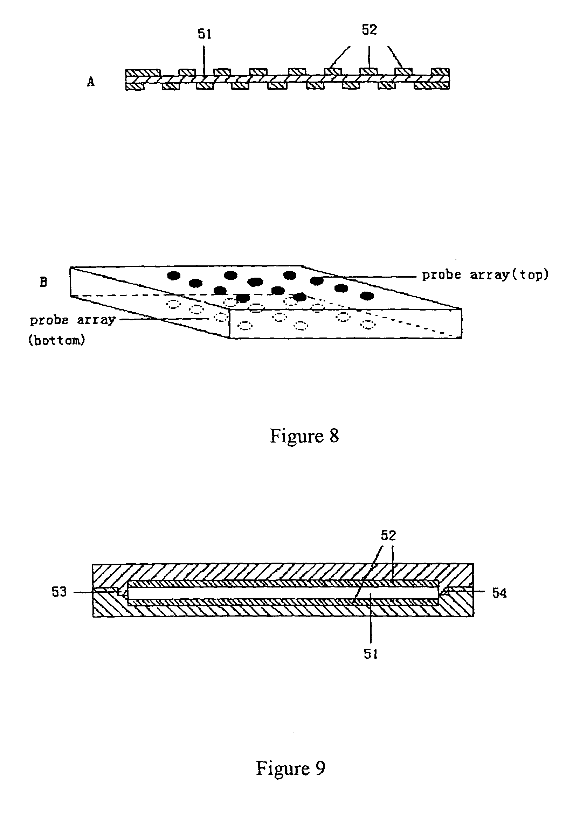

Figure 8A is the sectional diagram of an example of the biochip with two effective faces of this invention. Figure 8B is the schematic diagram of an example of probe arrays immobilized on two surfaces of substrate in the biochip with two effective faces. Figure 9 is the schematic diagram of an example of the biochip with two effective faces in this invention, in which the biochip components are connected by reversible fixture mechanically. As shown in 8A, the biochip with two effective faces in this invention is composed of two dieplates 52 and substrate 51 joined by adhesive. The two surfaces of this substrate 51 are both conjugated with probe array (as shown in figure 8B). As shown in figure 9, the biochip is formed by two dieplates 52 and one substrate 51 forming sandwich structure, and two pieces of fixture board 53 fixing said sandwich structure on the position in fixation mould 54. The said fixture also includes the corresponding magnetic fixture (as shown in figure 2), in addition to the mechanic fixture.

The structures on top plane and the structure on bottom plane in this invented biochip with two effective faces are symmetric or asymmetric. For example, the reactors on a surface overlap, wholly or partially or with nothing, to the projections from the reactors on another surface. All of the structures contained by a reactor are on one of the two surfaces, or not on one of the two surfaces. As shown in 8A, the reactors made of one substrate 51 and two dieplates 52 are asymmetric each other.

In this invented biochip with two effective faces, the thickness of substrate is larger than 1.0±0.1mm.

In this invented biochip with two effective faces, the partition among reactors on any surface can employ partition mechanism described above in this invention, or other partition mechanism.

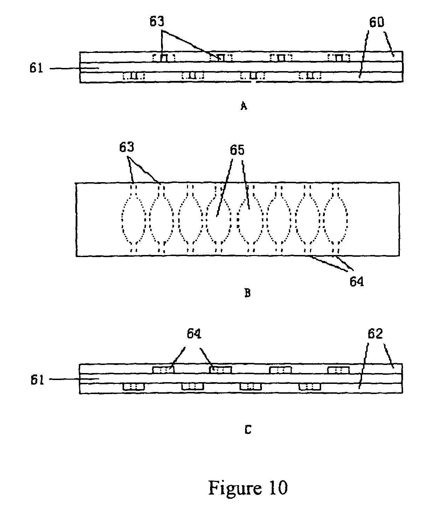

As shown in figures 10A-C, this invented biochip with two effective faces is composed of substrate 61 and two dieplates 62, and comprises several reactors 65. In the course of sample detecting, the biochip with two effective faces will stand straight up. Reaction media are added from inlet 63, which under the action of gravity, will flow through reactor 65 and flow out of outlet 64 directly. So it is much more convenient to conduct detection.

This invention also includes one kind of combined biochip. Its characteristic is: it is composed of several biochips as mentioned above in this invention. These biochips are connected with each other by means of insertion, adhesion and mechanic positioning; total width is no less than 25mm; and the number of biochips or probe for said combining can be changed according to requirements during the detection.

In this invented biochip, the material for substrate include all kinds of materials which can form biochip reactor with much small average area, for instance inorganic materials such as glass, silicon and silicon compounds and etc., organic high polymer such as polypropylene, polyvinylchloride, polystyrene, nylon and nitrate cellulose, as well as organic materials whose surface are covered with metals such as gold, silver or metal compounds.

The advantages of this invented biochip are: the chip cost used for testing a sample is reduced by maximizing the number of reactors on unit area of substrate when the testing desires only a few of probes.

### Implementation examples

All biochip substrates in this invention are substrates available in market or experimental substrates of SEDAC Company; France.

### Implementation example 1: A flow biochip with covering-variability based on magnetic force

The basic structure of biochip in this example is shown in figure 1 and figure 2. The dieplate with elastic material (2) is made from plastic plate containing iron with thickness of 1 cm. In the dieplate, there are 8 reactor cavities 5 joined with inlet 3 and outlet 4. The inlet 3 can be contacted closely with tip of pipette. The outlet 4 can be connected with inductive pipe. Probe arrays corresponding to reactor cavities 5 are formed on the substrate 1. Besides, The surface of dieplate in touch with substrate is stuck with one layer of rubber sealing spacer with thickness of 0.5mm and without covering the reactor cavities. The magnetic force fixture consists of electric magnet 7 below substrate 1 and magnetic plate 6 with iron above dieplate 2. The orientation notch 8, located between the magnetic force fixture and the dieplate 2, is used for fixing substrate 1. On substrate 1, according to cavity position of dieplate 2, there are probe arrays immobilized in advance for forming 8 reactors (their positions shown in figure 1C). The probes are HCV antigen, HIV ₁₊₂ antigen and syphilis antigen, respectively. The probe array is a 3 x 3 probe array in which each kind of probe is spotted in 3 spots. The reactor partition is produced through running the electric magnet, after dieplate 2, substrate 1 with probe immobilized and magnetic force fixture are connected on position. Then the processes, such as sample addition, washing solution addition, the marker addition, and washing, are performed. The connection between dieplate 2 and substrate 1 is removed by running off the electric magnet before scanning. The substrate 1 is obtained for the scanning.
In this implementation example, sample 1 is HCV antibody positive serum, sample 2 is HIV₁₊₂ antibody positive serum, sample 3 is syphilis antibody positive serum, sample 4 is positive control (the mixture of HCV antibody, HIV₁₊₂ antibody and syphilis antibody positive serum control), sample 5 is negative control (the HCV antibody, HIV₁₊₂ antibody and syphilis antibody negative serum). All samples have been determined by pre-detection by classical mono-reactor open biochip under the same reactive condition. The result is shown in table 1.

**Table 1**

| the result of the biochip covered reversibly by magnetic force or flow biochip | | | |
|---|---|---|---|
| sample | HCV antibody | HIV1+2 antibody | syphilis antibody |
| Nº1 | + | - | - |
| Nº2 | - | + | - |
| Nº3 | - | - | + |
| Nº4 | + | + | + |
| Nº5 | - | - | - |
| control | - | - | - |

### Implementation example 2: A open biochip with concave partition structure

The basic structure of biochip in this example is shown in figure 3. Each size of substrate 11 is 5.0 x 5.0 x 1.0mm (length x width x height). Dieplate 12 is a plastic plate with a size of 75 x 25 x 0.5mm (length x width x height). Two rows eight columns totally 16 substrates 11 adhere to the dieplate 12 with a rows distance of 5mm and a columns distance of 4mm. The probes, same as that in implementation example 1, are immobilized on each substrate 11 in the form of the 3 x 3 probe array. A filter paper with thickness of 0.5mm, which presents 16 pre-open square holes correspondent to the size and the distribution of substrate on the dieplate, is used as water-absorbing layer 13 to cover dieplate. Thus, the open biochip with concave partition structure including filter paper as the flow-controlling structure is formed (figure 3C). The reactive media are added directly on upper part of substrate 11. When added enough quantity, the media flow to the filter paper in concave structure. The filter paper delivers the liquid outward, and the liquid leaves from biochip through mechanic taking out or more water-absorbent materials. Before scanning, remove filter paper, then wash, and blast-dry biochip. The same result as that in implementation example 1 is obtained using the biochip in this implementation example, when same samples as that in implementation example 1 are subjected. In the scanning, the inlet rod of scanner descends 0.5mm, compared with that in scanning in implementation example 1.

### Implementation example 3: An open biochip with height-variable partition structure, which is formed by adhesion and is lowered by mechanical force

The basic structure of biochip in this example is shown in figure 4. The dieplate 22 is a plastic plate with an external size of 75 x 25 x 7mm (length x width x height) and 16 round holes in the form of 2 rows 8 columns. Each hole presents a diameter of 5mm. The biochip is produced through adhering the dieplate 22 with the substrate 21, in which the probes same as those in implementation example 1 are immobilized. In the testing using this biochip, the samples are subjected in the reactors using a dispenser, and the washing buffer and the marker are respectively subjected in the reactors and then removed from the reactors by a common ELISA plate washer. The samples are human serum samples same as those in the implementation example 1, and the marker is the goat anti-Ab against human immunoglobulin labeled with rhodanmine. The height of the partition structure on the dieplate is reduced from 7 mm to that smaller than 0.5mm by a cutter (as shown in figure 4B and 4C). After washed with distilled water and then alcohol, and dried with a blast-dryer, the biochip with the substrate and the dieplate remainder on the substrate is set in the scanner to analyze. The result obtained by this analysis is the same as that in example 1.

### Implementation example 4: An open biochip with hydrophobic partition structure

The basic structure of biochip in this example is shown in figure 5.
The substrate 31 presents a size of 75.0 x 12.5 x 1.0mm (length x width x height). The dieplate 32 presents an external size of 75.0 x 25.0 x 1.6mm (length x width x height). The central part of the dieplate 32 is a concave groove with a size of 75.0 x 12.8 x 1.0mm (length x width x height). The bottom of the concave groove presents, in the form of 2X8 array, 16 round holes with a diameter of 5mm. The substrate 31 is adhered to the concave groove of the dieplate 32 to form the prepared biochip with 16 wells. Probes used in this implementation example are the same as figure 1 with 3 x 2 probes spots array. The size of probe region 34 in the central of reactive well is almost 1.2 x 1.0mm. The area except probe region circled by the hole of dieplate is used as outlet region (as shown in figure 5C). The biochip is blocked by bovine albumin and ready for use. In this implementation example, one kind of ELISA plate washer is used which contains adding/pumping mechanism with concentric circle, wherein adding is in the higher place of the center and pumping is in periphery.

The external circle of pumping can touch to the outlet region of reactor where no probe is fixed on. The assayed human serum samples and detective method in this implementation are the same as implementation 3. The detective results are the same too.

### Implementation example 5: A biochip with two effective faces

The basic structure of the biochip prepared in this Example is shown in figure 8A and figure 9. The connection among one substrate and two dieplates for forming this biochip is a reversible connection through fixture.
The substrate 51 presents a size of 75 x 25 x 1mm (length x width x height). The two dieplates present a same size of 75X25X0.5mm (length x width x thickness). There are 16 roles with a diameter of 4.5mm on each of the dieplates, in the form of 2X8 array. The positions of the roles on a dieplate are asymmetric to those of the roles on another dieplate. The probes used in this implementation example are same as those in implementation example 1. The probes are immobilized, in the form of 3X2 array, on the two surface of the substrate respectively. The probe arrays are located according to the positions of the roles in each of the dieplates. After inactivated with bovine serum albumin and dried, the substrate is connected with the two dieplate. The fixture board 53 and the fixation mould 54 are used for the connection with an accurate position. The connection is achieved through forming two sealed surfaces, one between the top surface of the substrate 51 and one dieplate 52 and another between the bottom surface of the substrate 51 and another dieplate 52. Then it is ready for use. The human serum and detective method used in this implementation example are the same as those in implementation example 3. Before scanning, remove the press of fixture board 53; take out the substrate, wash and blast-dry. The scanning of the substrate is performed under the condition that inlet rod of scanner descents 0.5mm. The result obtained is same as that in implementation example 1.

## Claims

1. A biochip, consisting primarily of one or several dieplates and one or several substrates with or without probe immobilized, and comprising a maximized number of reactors, wherein:
a. said maximization of reactor number is performed by minimizing structure-covered area on the substrate and/or maximizing effective area on the substrate, wherein said structure is partition structure of the reactor and/or structure other than the reactor; and
b. said partition structure is characteristically based on surface partition, hydrophobic surface partition, or height-difference partition.

2. The biochip of Claim 1, wherein said dieplate and said substrate are connected to form one or several closed flow reactors with inlet and outlet.

3. The biochip of Claim 2, wherein:
a. said connection between said dieplate and said substrate is either reversible or irreversible;
b. said reversible connection, dis-connectable when desired, is performed with one or more following forces:
a). mechanic force generated by gravity, elasticity, screws or fixture;
b). magnetic force generated by magnet or electric magnet;
c). removable adhesion force produced by adhesive; and
c. said dieplate is partial or entire machine-eliminable, when it is desired to open or/and to lower height of said reactor formed by said irreversible connection.

4. The biochip of Claim 1, wherein said partition structure including concave structure.

5. The biochip of Claim 4, wherein said concave structure contains one or more of the following flow-controlling structures:
a. hydrophilic material layer;
b. hydrophobic material layer;
c. layer of water-absorbing material based on capillary actions; and
d. leading ditches, leading trough, leading strip helpful for flow-controlling.

6. The biochip of Claim 1, wherein:
a. said dieplate and said substrate are connected by adhesion to form multiple open reactors; and
b. said partition structure presents a height of more than 0.7mm.

7. The biochip of Claim 6, wherein said partition-structure presents a height of more than 1.0mm.

8. The biochip of Claim 6, wherein said partition structure is either eliminable or height-deductible through removal of said adhesion or by mechanic action, wherein:
a. said removal is performed with one or more following actions:
a). physical chemistry action of swelling and dissolving with water or/and organic solvents;
b). physical action of ultrasonic wave; and
c). mechanic action;
b. said mechanic action includes grinding, cutting, whittling, or their combination.

9. The biochip of Claim 1, wherein:
a. said dieplate and said substrate are connected to form multiple open reactors with special outlet region; and
b. said partition structure is on the dieplate, wherein:
a). said partition structure presents a height of less than 1.0 mm; and
b). said partition structure is more hydrophobic than said substrate.

10. The biochip of any in Claims 6-9, wherein:
a. said substrate presents a width of less than 20mm when two or more rows of reactors are formed on a substrate; or
b. said substrate presents a width of less than 9 mm when only one row of reactors are formed on a substrate.

11. The biochip of any one in Claims 6-9, wherein said reactor is strip-shaped reactor.

12. The multi-reactor-biochip of any one in Claims 6-9, wherein said partition structure presents a height of more than that of parts or all of other structure on the biochip.

13. The multi-reactor-biochip of Claim 12, wherein said other structure includes scanning-reference-plane on the same plane as the substrate plane with immobilized probes.

14. The biochip of any one of Claims 6-9, wherein:
a. the area of said biochip is bigger than that of said substrate; and
b. parts or all of inlet structures or/and outlet structures of said reactor are set on dieplate region where said dieplate goes beyond said substrate.

15. The multi-reactor-biochip of any in Claims 6-9, wherein said reactor comprises inlet region and/or outlet region including one or more of the following flow-controlling-structures:
a. hydrophilic material layer;
b. hydrophobic material layer;
c. layer of water-absorbent based on capillary actions; and
d. leading ditch, leading trough, leading strip helpful for flow-controlling.

16. The biochip of Claim 5 or Claim 15, wherein:
a. said hydrophilic material includes:
a). hydrophilic inorganic material including silicon, aluminum compounds;
b). hydrophilic organic material including polyacrylamide compounds;
c). hydrophilic coating; and
d). natural macromolecular material and its derivatives;
b. said hydrophobic material includes hydrophobic organic material; and
c. said water-absorbent includes:
a). capillary, paper, membrane with hydrophilic surface; and
b). porous solid material with fiber or/and hydrophilic inorganic materials.

17. The biochip of Claim 1, a biochip with two effective faces, wherein:
a. said probe is immobilized in said reactors on both top surface and bottom surface of substrate; and
b. structures are symmetrical or asymmetrical on said top and bottom surfaces, mutually.

18. The biochip of Claim 17, wherein said substrate presents a thickness more than 1.0±0.1mm.

19. The biochip of any one of Claim 1-18, wherein said substrate is made of any material which can form said reactor with a relatively small average area, including:
a. inorganic material including glass, silicon and silicon compound.;
b. organic macromolecular polymer including polypropylene, polyvinylchloride, polystyrene, nylon and nitrate cellulose ; and
c. organic material coated with metal including gold and silver.

20. A combined biochip, composed of several said biochips of any one of Claim 1-19, wherein :
a. said several biochips are combined through insertion, adhesion and mechanic apposition;
b. its total width is of no less than 25mm; and
c. the number of said biochips combined is changeable as required.
